# EUROPÄISCHE PATENTSCHRIFT

(11) **EP 2 350 500 B1**
(45) Veröffentlichungstag und Bekanntmachung des Hinweises auf die Patenterteilung: **12.12.2012**
(21) Anmeldenummer: 09736187.7
(22) Anmeldetag: 07.10.2009
(51) Int. Cl.: F16H 63/20, F16H 63/30, F16H 63/32

(54) **SCHALTVORRICHTUNG FÜR EIN SCHALTGETRIEBE EINES KRAFTFAHRZEUGS**
SHIFTING DEVICE FOR A MANUAL TRANSMISSION OF A MOTOR VEHICLE
DISPOSITIF DE COMMUTATION POUR LA BOÎTE DE VITESSES D'UN VÉHICULE AUTOMOBILE

(30) Priorität: 25.10.2008 DE 102008053251
(43) Veröffentlichungstag der Anmeldung: 03.08.2011
(73) Patentinhaber: Schaeffler Technologies AG & Co. KG, 91074 Herzogenaurach (DE)
(72) Erfinder: KLEIBER, Thomas, 91074 Herzogenaurach (DE)
(86) Internationale Anmeldenummer: PCT/EP2009/063050
(87) Internationale Veröffentlichungsnummer: WO 2010/046236

(56) Entgegenhaltungen:
- DE-A1-102004 053 894
- DE-A1-102005 010 001
- DE-A1-102007 019 011
- FR-A- 2 884 888

## Beschreibung

### Gebiet der Erfindung

Die Erfindung betrifft eine Schaltvorrichtung für ein Schaltgetriebe eines Kraftfahrzeugs mit zumindest einem zum Einbringen von Schaltbewegungen in das Schaltgetriebe um eine Drehachse drehbaren und entlang dieser längsverschiebbaren Übertragungselement.

Bei derartigen Schaltvorrichtungen überträgt üblicherweise eine drehbare und längsverschiebbare Schaltwelle Wähl- und Schaltbewegungen von einer Außenschaltung, insbesondere eines Handschalthebels mit entsprechenden Übertragungsmitteln, auf eine Innenschaltung, beispielsweise eine Schaltstange, Schaltschiene, Schaltgabel oder dergleichen. Zur Gewährleistung eines sicheren Wählens und Schaltens sind an der Schaltwelle mehrere zusätzliche Funktionselemente vorgesehen. Als solche Funktionselemente werden beispielsweise Schaltfinger, Sperrbügel oder -bleche und Rastierbleche oder dergleichen verwendet. Eine derartige Schaltvorrichtung ist beispielsweise aus DE 195 46 547 C1 bekannt. Nachteilig wirkt sich bei dieser Ausgestaltung der Umstand aus, dass die zusätzlichen Funktionselemente über aufwendig herstellbare präzise Pressverbände, Schweißverbindungen, Nietverbindungen oder Verstemmungen mit der Schaltwelle verbunden werden müssen. Außerdem entsteht durch die hohe Zahl an zusätzlichen Komponenten ein hoher Ferti-Material- sowie Montage- und Prüfaufwand. Zudem beanspruchen die zusätzlich an der Schaltwelle erforderlichen Komponenten viel Bauraum.

Die gattungsgemäße DE 10 2007 019 011 A1 zeigt eine Schaltschiene aus einem Flachprofil, die allerdings keine Mittel zum Sperren einer Dreh- oder Längsbewegung vorsieht.

### Zusammenfassung der Erfindung

Der Erfindung liegt daher die Aufgabe zugrunde, eine Schaltvorrichtung der vorgenannten Art hinsichtlich ihres Aufbaues zu vereinfachen, eine hohe Funktionssicherheit zu gewährleisten und den Herstellungsaufwand zu verringern. Die Aufgabe wird durch die Merkmale des Anspruchs 1 gelöst.

Das erfindungsgemäß zungenförmig ausgebildete Übertragungselement ist als Flachteil aus Flachmaterial herstellbar und weist nach Fertigstellung im Wesentlichen die flache Grundform des Ausgangsmaterials auf. Beispielsweise kann das zungenförmige Übertragungselement aus Bandstahl, insbesondere umseitig aus Blech ausgestanzt werden. Denkbar ist auch, das Übertragungselement aus Profibandstahl mit vorgefertigten Funktionselementen herzustellen. An den ebenen flachen Seiten geringer Materialstärke sind Funktionselemente, wie beispielsweise Schaltfinger, Sperr- oder Rastkonturen, unmittelbar am Flachmaterial des Übertragungselements, insbesondere durch blechverarbeitende Verfahren, wie zum Beispiel Stanzen, aber auch durch andere nicht spanende Fertigungsverfahren, wie beispielsweise Prägen oder LaserSchneiden, leicht herstellbar. Hierdurch wird ein einfacher Aufbau mit geringer Komponentenzahl und geringem Materialaufwand erreicht. Gleichzeitig werden aufwendige Schweiß- und Pressverbände vermieden sowie der Montageaufwand reduziert. Außerdem wird eine dichtere Anordnung des Übertragungselements mit anderen Getriebeelementen, beispielsweise Schaltstangen oder Schaltschienen ermöglicht, wodurch der Bauraumbedarf reduziert werden kann.

Ein oder mehrere Funktionselemente können unmittelbar in das Material des Übertragungselements, beispielsweise als Ausnehmungen, eingebracht werden, wobei diese durch Stanzen über die flachen Seiten des Übertragungselements besonders einfach herstellbar sind.

Eine Sperrkontur zum Sperren einer Dreh- oder Längsbewegung des Übertragungselements kann über zumindest eine unmittelbar an den flachen Seiten desselben ausgebildete Sperröffnung realisiert werden. Das Sperren einer Dreh- oder Längsbewegung des Übertragungselements kann hierbei durch ein formschlüssiges Eingreifen eines Sperrelements in die Sperröffnung, beispielsweise einem Loch oder Sperrschlitz, erreicht werden. Das Sperrelement kann dabei an einem weiteren Getriebeelement, beispielsweise an einem Schaltmaul einer Schaltschiene oder ortsfest, beispielsweise am Schaltgehäuse, angeordnet sein.

Eine zwischen den Randbereichen des Übertragungselements mittige Anordnung, etwa in Höhe der Drehachse des Übertragungselements, einer oder mehrerer Sperröffnungen an den flachen Seiten des Übertragungselements ermöglicht zum Sperren einen einfachen zentralen Eingriff an den flachen Seiten des Übertragungselements.

Eine andere Ausgestaltung sieht vor, ausgehend von zumindest einer schmalen Längsseite des Übertragungselements zumindest eine als Sperrschlitz ausgeführte Sperröffnung am seitlichen Randbereich der flachen Seiten vorzusehen. Der Sperrschlitz ist dabei an der schmalen Längsseite des Übertragungselements offen ausgebildet. Dadurch ist außen am Übertragungselement zum Sperren ein einfacher Eingriff an den schmalen Längsseiten möglich. Denkbar ist auch, andere zu den schmalen Längsseiten hin offene Sperrkonturen, wie beispielsweise Sperrkerben, Sperrnuten oder dergleichen, vorzusehen. Die Sperröffnungen sind an den Materialstärkeseiten des Übertragungselements besonders einfach, beispielsweise durch seitliches Ausstanzen über die flachen Seiten des Übertragungselements, herstellbar.

Vorzugsweise sind zwei Sperrschlitze einander gegenüberliegend an den seitlichen Randbereichen der flachen Seiten angeordnet. Hierbei können ein oder mehrere an den seitlichen Randbereichen des Übertragungselements insbesondere seitlich angreifende Sperrelemente, beispielsweise ein Schaltmaul an einer Schaltstange oder eine ortsfeste Sperrgabel, zum Sperren in beide Sperrschlitze gleichzeitig einkoppeln.

Eine Sperrung der Bewegung des Übertragungselements kann auch über einen oder mehrere an einer oder beiden Längsseite des Übertragungselements in einer Ebene mit diesem liegend einteilig mit dem Übertragungselement ausgeführte seitlich vorstehende Wirkabschnitte erfolgen. Auf diese Weise kann beispielsweise ein seitlich vorstehender Kamm gebildet werden, der bei einer Dreh- oder Längsbewegung des Übertragungselements an einem weiteren Getriebeelement, beispielsweise einer Sperrgabel, zum Sperren angreift und das Übertragungselement dadurch in einer Bewegungsrichtung sperrt. Denkbar ist auch, dass der Wirkabschnitt als Betätigungselement zum Übertragen von Schaltbewegungen ausgeführt ist und beispielsweise zum Schalten formschlüssig in ein Schaltmaul an einer Schaltschiene oder in eine Schaltgabel eingreift. Ein seitlich vorstehender Wirkabschnitt ist beispielsweise durch seitliches Ausstanzen an den Randbereichen an den flachen Seiten des Übertragungselements einfach herstellbar.

Beispielsweise ist es weiterhin möglich einen einteilig mit dem Übertragungselement ausgeführten Schaltfinger an einer Längsseite des Übertragungselements in einer Ebene mit diesem liegend auszubilden. Vorzugsweise ist dabei der Schaltfinger fluchtend mit einer an den flachen Seiten des Übertragungselements ausgebildeten Sperröffnung ausgeführt. Hierdurch ist es möglich, einen Schaltfinger am Übertragungselement in einem Schwenkbereich oder auf einer Schwenkbahn mit einer Sperrkontur liegend anzuordnen.

Ein seitlich vorstehenden mit dem Übertragungselement einteiliger Wirkabschnitt kann auch durch zumindest zwei benachbart angeordnete Sperrschlitze an zumindest einem der seitlichen Randbereiche des Übertragungselements gebildet werden. Dabei entsteht jeweils ein Wirkabschnitt im Zwischenraum zwischen zwei benachbarten Sperrschlitzen am Randbereich. Da die Sperrschlitze selbst eine Sperrkontur am Übertragungselement bilden, ist auf diese Weise gleichzeitig sowohl eine Sperr- als auch eine Betätigungsfunktion realisierbar.

Es ist auch möglich, mehrere benachbarte Sperrschlitze an einem oder mehreren Randbereichen des Übertragungselements anzuordnen. Hierdurch entstehen an den Randbereichen des Übertragungselements mehrere Wirkabschnitte, die jeweils Sperrelemente und/oder Betätigungselemente bilden können.

Die an den Randbereichen des Übertragungselements angeordneten Sperrschlitze können an den Außenkanten derselben jeweils eine Fase aufweisen, um das seitliche Eingreifen zu erleichtern und Reibung sowie Verschleiß an den Eingriffsflächen gering zu halten.

Eine Rastierung kann unmittelbar am Übertragungselement durch eine Rastkontur bestehend aus an der Oberfläche zumindest einer flachen Seite und/oder an der Oberfläche zumindest einer schmalen Längsseite des Übertragungselements eingebrachte Vertiefungen erreicht werden.

Denkbar ist auch, eine Kontur für eine Gassenführung an der Oberfläche zumindest einer flachen Seite und/oder an der Oberfläche zumindest einer schmalen Längsseite des Übertragungselements vorzusehen.

Solche Rast- oder Gassenkonturen können beispielsweise an den Oberflächen der flachen Seiten durch Materialverdrängung eingeprägt oder an den schmalen Längsseiten seitlich ausgestanzt werden.

Eine weitere Variante der Erfindung sieht an den flachen Seiten und/oder zumindest einer schmalen Seite des Übertragungselements eine oder mehrere Aufnahmeöffnungen zur Befestigung eines oder mehrerer Funktionselemente vor. Besonders einfach lassen sich Steckform- oder Steckkraftschlussverbindungen an einer Aufnahmeöffnung herstellen. Hierzu kann die Aufnahmeöffnung beispielsweise rund, als einfaches Loch, oder mehrkantig ausgeführt sein.

Zur Betätigung eines weiteren Getriebeelements kann zumindest ein mit diesem formschlüssig koppelbarer Schaltfinger oder Mitnehmer an einer Aufnahmeöffnung an den flachen Seiten des Übertragungselements, beispielsweise an einer Lochung, steckform- oder steckkraftschlüssig befestigt sein.

Eine Lochung an den flachen Seiten kann auch beispielsweise für die Aufnahme einer Arretierung oder eines Rastierbleches vorgesehen sein. Denkbar ist auch, ein Rastierblech beispielsweise an einer der schmalen Seiten in einer Haltekerbe zu befestigen.

Vorzugsweise ist die Aufnahmeöffnung mittig zwischen den Randbereichen des Übertragungselements etwa in Höhe der Drehachse des Übertragungselements angeordnet.

Durch fluchtende Anordnung von zwei an den Randbereichen gegenüberliegend ausgebildeten Sperrschlitzen mit einer an den flachen Seiten des Übertragungselements ausgebildeten Aufnahmeöffnung, kann beispielsweise ein in letzterer befestigter Schaltfinger in einem Schwenkbereich oder auf einer Schwenkbahn mit einer Sperrkontur liegend angeordnet werden.

An einem oder beiden axialen Endabschnitten des Übertragungselements kann zur Lagerung des Übertragungselements jeweils ein am Endabschnitt fixiertes Adapterelement vorgesehen-sein:-Durch schlanke, mit reduzierter Breite ausgebildete Endabschnitte wird eine bauraumsparende Anordnung die Adapterelemente erreicht. Die Lagerung kann insbesondere mittels Lagerhülsen erfolgen, die jeweils radial außen eine Lagerfläche bilden und an einem radial innen ausgebildeten vorzugsweise Vier- oder Mehrkantprofil an den Endabschnitten des Übertragungselements form- und oder kraftschlüssig aufsteckbar sind. Alternativ ist auch eine Kunststofflagerung möglich, die am Endabschnitt angespritzt oder als Hülse über eine Zahnscheibe fixierbar ist.

Eine Lagerkennung am Übertragungselement ist beispielsweise über zumindest eine an einer Längsseite desselben ausgebildete Kerbe möglich.

### Kurze Beschreibung der Zeichnungen

Weitere Merkmale der Erfindung ergeben sich aus der nachfolgenden Beschreibung und aus den Zeichnungen, in denen mehrere Ausführungsbeispiele der Erfindung vereinfacht dargestellt sind. Es zeigen:
- Fig. 1:: eine perspektivische Darstellung eines Ausführungsbeispiels eines erfindungsgemäßen Übertragungselements,
- Fig. 2a - 2b:: eine perspektivische Teilansicht der Schaltvorrichtung mit einem Übertragungselement,
- Fig. 3a - 3d:: perspektivische Teilansichten einer weiteren beispielhaften Anordnung des Übertragungselements.

### Ausführliche Beschreibung der Zeichnungen

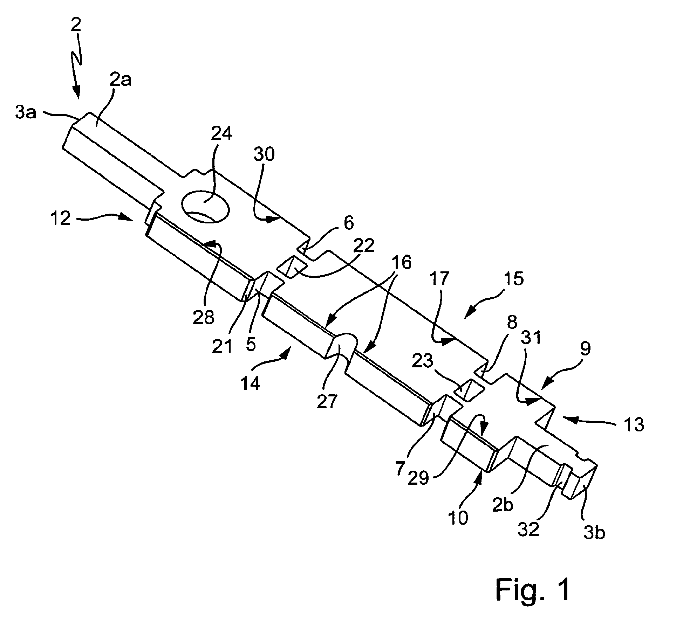

Ein Ausführungsbeispiel eines erfindungsgemäßen Übertragungselements 2 ist in Figur 1 perspektivisch dargestellt. Das Übertragungselement 2 weist eine flache, im Wesentlichen rechteckige Form mit im Verhältnis zu seiner Breite geringer Materialstärke auf. An zwei ebenen, voneinander abgewandten flachen Seiten 9, 10 schließen sich zwei seitlich an den Materialstärkeseiten gebildete schmale Längsseiten 14, 15 an. Dabei weist das Übertragungselement 2 ein im Wesentlichen rechteckiges Querschnittsprofil auf. An den flachen Seiten 9, 10 sind mehrere in das Material des Übertragungselements eingebrachte Ausnehmungen vorgesehen, die unterschiedliche Funktionen realisieren können.

Ausgehend von den schmalen Längsseiten 14, 15 sind an den beiden seitlichen Randbereichen 12, 13 der flachen Seiten 9, 10 jeweils zwei benachbarte als rechteckige Sperrschlitze ausgeführte Sperröffnungen 5, 6, 7, 8 am Übertragungselement 2 eingebracht. Die Sperrschlitze sind zu den schmalen Längsseiten 14, 15 hin offen und quer zu den Längsseiten 14, 15 nach innen verlaufend ausgebildet. Jeweils zwei Sperröffnungen 5, 6 und 7, 8 sind dabei gegenüberliegend an den Randbereichen 12, 13 angeordnet. Die Sperrschlitze bilden jeweils eine Sperrkontur, an der außen am Übertragungselement 2 zum Sperren einer Dreh- oder Längsbewegung desselben ein nicht dargestelltes Sperrelement, beispielsweise eine Sperrgabel oder ein Sperrblech, formschlüssig eingreifen kann.

Am Randbereich 12 sind im Zwischenraum zwischen den Sperrschlitzen 5, 7 und im Zwischenraum zwischen diesen und den Endabschnitten 2a, 2b des Übertragungselements jeweils als seitlich vorstehender Kamm ausgebildete Wirkabschnitte 16, 28, 29 vorgesehen. Am Randbereich 13 sind entsprechend im Zwischenraum zwischen den Sperrschlitzen 6, 8 und im Zwischenraum zwischen diesen und den Endabschnitten 2a, 2b des Übertragungselements 2 Wirkabschnitte 17, 30, 31 ausgebildet. Diese können jeweils bei einer Dreh - oder Längsbewegung des Übertragungselements 2 zur Sperrung an einem weiteren nicht dargestellten Getriebeteil, beispielsweise einem Schaltmaul, Schaltgabel, Vorsprung oder an einem Hebel, angreifen und das Übertragungselement 2 in einer Bewegungsrichtung sperren.

Die Sperrschlitze können an ihren Außenkanten optional jeweils mit einer Fase 21 ausgeführt werden.

Es ist möglich, zwischen den an den Randbereichen 12, 13 gegenüberliegend angeordneten Sperrschlitzen 5, 6 und 7, 8 optional jeweils fluchtend mit diesen eine rechteckig ausgebildete Aufnahmeöffnung 22, 23 zur Aufnahme jeweils eines Schaltfingers 19, 20 vorzusehen. Eine weitere als Rundloch ausgeführte Aufnahmeöffnung 24 kann ebenfalls optional, beispielsweise als Haltevorrichtung zur Aufnahme einer Rastierung, am Übertragungselement 2 ausgebildet werden.

An den axialen Endabschnitten 2a, 2b ist das Übertragungselement 2 mit reduzierter Breite schlank ausgeführt. Die Endabschnitte 2a, 2b weisen jeweils ein Vierkantquerschnittsprofil 3a, 3b auf. Optional kann an ihnen zusätzlich eine Haltekerbe 32 vorgesehen sein.

Zur Lageerkennung ist an einer schmalen Längsseite 14, 15 des Übertragungselements 2 eine Kerbe 27 ausgebildet.

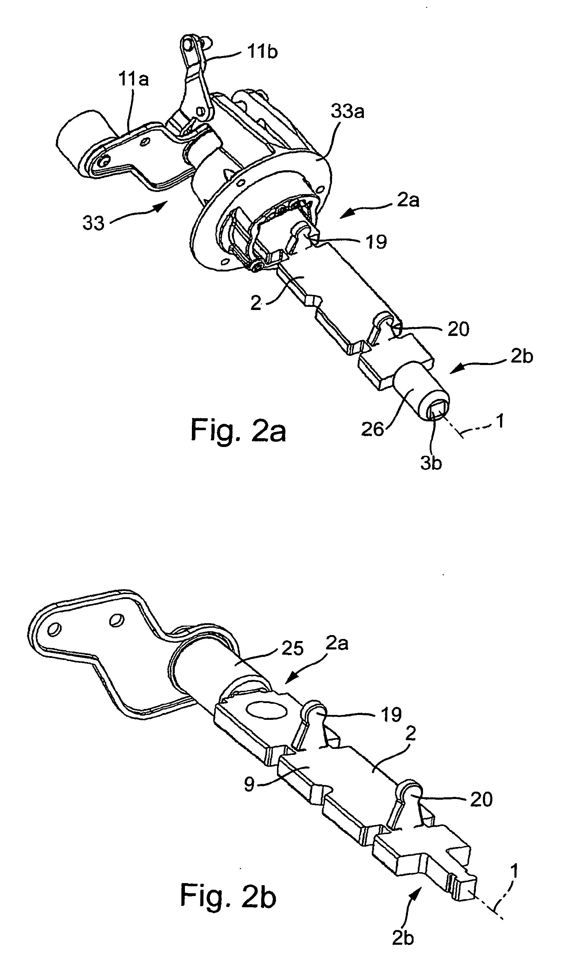

Figuren 2a und 2b zeigen perspektivische Ansichten des in einem Schaltdom 33 einer Schaltvorrichtung angeordneten Übertragungselements 2. An den Endabschnitten 2a, 2b ist jeweils ein als Lagerhülse ausgebildetes Adapterelement 25, 26 am Übertragungselement 2 an einem Vierkantprofil 3a, 3b aufgesteckt. Das Übertragungselement 2 ist über die Lagerhülsen einerseits am Endabschnitt 2a im Schaltdom 33 und andererseits am vom Schaltdom 33 abgewandten Endabschnitt 2b über eine Endlagerung, beispielsweise an einem nicht dargestellten Schalt- oder Getriebegehäuse, um seine Drehachse 1 verschwenkbar und entlang dieser längsbeweglich beidseitig lagerbar. An den Enden kann eine Verschraubung oder Verstemmung angebracht werden, um die Komponenten in Position zu halten. In Figur 2b ist das Übertragungselement 2 mit dem am Endabschnitt 2a zur Lagerung im Schaltdom 33 angeordneten Adapterelement 25 und am Endabschnitt 2b ohne ein Adapterelement 26 dargestellt. Über einen zentralen Befestigungsflansch 33a ist der Schaltdom 33 beispielsweise am Schalt- oder Getriebegehäuse befestigbar. Wähl- und Schaltbewegungen von einem nicht-dargestellten Handschalthebel oder Aktor können mittels zweier Hebel 11a, 11 b als Dreh- bzw. Längsbewegung auf das Übertragungselement 2 und von diesem zentral auf das nicht dargestellte Getriebe übertragen werden. Zur Betätigung eines nicht dargestellten Schaltelements sind zwei als Schaltfinger 19, 20 ausgeführte Betätigungselemente jeweils in einer Aufnahmeöffnung 22, 23 an einer flachen Seite 9 des Übertragungselements 2 senkrecht zu letzterer ausgerichtet angeordnet. Zur Übertragung einer durch die Hebel 11a, 11 b auf das Übertragungselement 2 als Dreh - oder Längsbewegung eingeleiteten Schaltbewegung können die Schaltfinger 19, 20 beispielsweise in ein Schaltmaul an einer Schaltstange oder einer Schaltgabel formschlüssig eingreifen.

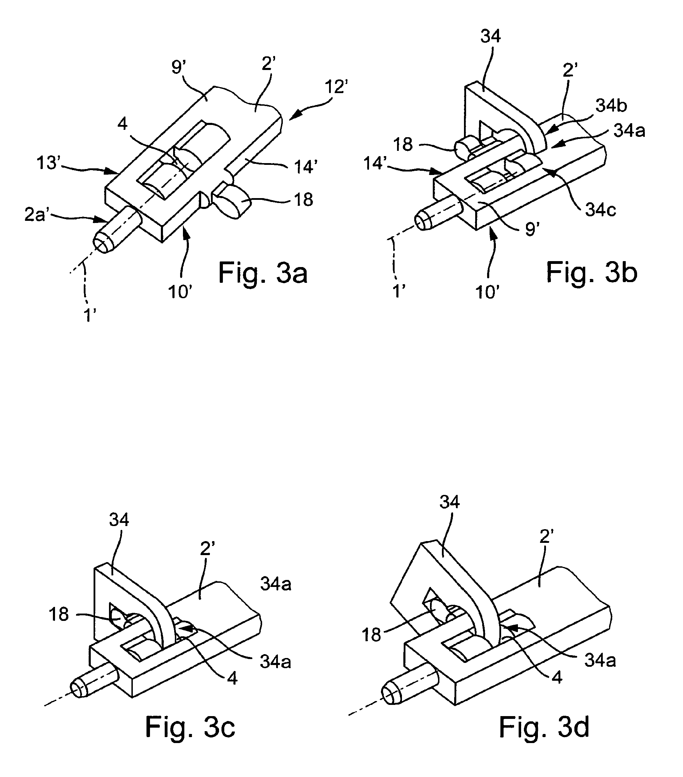

In Figuren 3a bis 3d ist ein weiteres Ausführungsbeispiel eines erfindungsgemäßen Übertragungselements 2' dargestellt. Figur 3a zeigt die perspektivische Teilansicht eines Übertragungselements 2', bei dem an den flachen Seiten 9', 10' etwa mittig beabstandet von den Randbereichen 12', 13' auf Höhe ihrer Drehachse 1' eine als rechteckiges Loch ausgeführte Sperröffnung 4 vorgesehen ist. An einer schmalen Längsseite 14' ist fluchtend mit der Sperröffnung 4 und in einer Ebene mit dem Übertragungselement 2' liegend ein einteilig mit diesem ausgebildeter Schaltfinger 18 angeschlossen. Ein Endabschnitt 2a' des Übertragungselements 2' ist als rundgespanter Hals ausgeführt und bildet auf diese Weise an seiner Außenoberfläche eine zylindrische Lagerfläche.

Figur 3b zeigt das Übertragungselement im Freigang axial verschiebbar gegenüber einem seitlich quer zur Drehachse 1' des Übertragungselements 2' angeordneten Schaltmaul 34. Die schmale Längsseite 14' mit dem an dieser angeordneten Schaltfinger 18 ist dabei dem Schaltmaul 34 zugewandt. Das Schaltmaul 34 weist an seiner dem Übertragungselement 2' zugewandten Seite 34a einen seitlich offenen Sperrabschnitt 34b auf, der das Übertragungselement 2' an den flachen Seiten 9', 10' seitlich bis etwa in Höhe der Drehachse 1' umgreift. Die Weite der Öffnung 34c am Sperrabschnitt 34b ist dabei mit Spiel gegenüber der Materialstärke des Übertragungselements 2' ausgeführt, um ein Längsverschieben des letzteren relativ zum Schaltmaul 34 zu ermöglichen. Durch ein Längsverschieben des Übertragungselements 2' relativ zum Schaltmaul 34 gelangt der Schaltfinger 18 in formschlüssigen Eingriff mit dem Schaltmaul 34 (Figur 3c). Dabei erreicht der Sperrabschnitt 34b die Eingriffsposition an der Sperröffnung 4. Bei einer Drehbewegung des Übertragungselements 2' kann über den Schaltfinger 18 eine Schaltbewegung auf das Schaltmaul 34 übertragen werden (Figur 3d). Gleichzeitig taucht dabei der Sperrabschnitt 34b des Schaltmauls 34 in die Sperröffnung 4 am Übertragungselement 2' ein, wobei eine abgerundete Innenkontur 34d am Sperrabschnitts 34b ein einfaches Drehen des Übertragungselements 2' erlaubt.

Gleichzeitig ist eine Längsbewegung des Übertragungselements 2' durch den in die Sperröffnung 4 eingetauchten Sperrabschnitt 34b gesperrt.

### Bezugszeichenliste

- 1: Drehachse
- 1': Drehachse
- 2: Übertragungselement
- 2': Übertragungselement
- 2a: Endabschnitt
- 2b: Endabschnitt
- 3a: Vierkantprofil
- 3b: Vierkantprofil
- 4: Sperröffnung
- 5: Sperröffnung
- 6: Sperröffnung
- 7: Sperröffnung
- 8: Sperröffnung
- 9: Seite
- 9': Seite
- 10: Seite
- 10': Seite
- 11a: Hebel
- 11 b: Hebel
- 12: Randbereich
- 12: Randbereich
- 13: Randbereich
- 13: Randbereich
- 14: Längsseite
- 14': Längsseite
- 15: Längsseite
- 16: Wirkabschnitt
- 17: Wirkabschnitt
- 18: Schaltfinger
- 19: Schaltfinger
- 20: Schaltfinger
- 21: Fase
- 22: Aufnahmeöffnung
- 23: Aufnahmeöffnung
- 24: Aufnahmeöffnung
- 25: Adapterelement
- 26: Adapterelement
- 27: Kerbe
- 28: Wirkabschnitt
- 29: Wirkabschnitt
- 30: Wirkabschnitt
- 31: Wirkabschnitt
- 32: Haltekerbe
- 33: Schaltdom
- 33a: Befestigungsflansch
- 34: Schaltmaul
- 34a: Seite
- 34b: Sperrabschnitt
- 34c: Öffnung
- 34d: Innenkontur

## Patentansprüche

1. Schaltvorrichtung für ein Schaltgetriebe eines Kraftfahrzeugs mit zumindest einem zum Einbringen von Schaltbewegungen in das Schaltgetriebe um eine Drehachse (1) drehbaren und entlang dieser längsverschiebbaren Übertragungselement (2, 2'), wobei das Übertragungselement (2, 2') ein im Wesentlichen rechteckiges Querschnittsprofil aufweist, d**adurch gekennzeichnet**, dass zum Sperren einer Dreh- oder Längsbewegung des Übertragungselements (2, 2') zumindest eine Sperröffnung (4-8) unmittelbar an den flachen Seiten (9, 9', 10, 10') des Übertragungselements (2, 2') vorgesehen ist.

2. Schaltvorrichtung nach Anspruch 1, **dadurch gekennzeichnet, dass** zumindest ein Funktionselement unmittelbar in das Material des Übertragungselements (2, 2') eingebracht ist.

3. Schaltvorrichtung nach einem der Ansprüche 1 bis 2, **dadurch gekennzeichnet, dass** zumindest eine Sperröffnung (4) mittig zwischen den seitlichen Randbereichen (12, 12', 13, 13') der flachen Seiten (9, 9', 10, 10') angeordnet ist.

4. Schaltvorrichtung nach einem der Ansprüche 1 bis 3, **dadurch gekennzeichnet, dass** ausgehend von den schmalen Längsseiten (14, 15) des Übertragungselements (2) an den Randbereichen (12, 13) zumindest zwei als Sperrschlitze ausgebildete, einander gegenüberliegende Sperröffnungen (5, 6, 7, 8) angeordnet sind.

5. Schaltvorrichtung nach einem der Ansprüche 1 bis 4, **dadurch gekennzeichnet, dass** an einer oder beiden Längsseiten (14, 14' 15) des Übertragungselements (2, 2') zumindest ein einteilig mit diesem ausgeführter seitlich vorstehender Wirkabschnitt (16, 17, 28-31) vorgesehen ist

6. Schaltvorrichtung nach einem der Ansprüche 1 bis 5, **dadurch gekennzeichnet, dass** an einer Längsseite (14, 14', 15) des Übertragungselements (2, 2') ein einteilig mit diesem ausgeführter Schaltfinger (18) angeordnet ist.

7. Schaltvorrichtung nach einem der Ansprüche 1 bis 6, **dadurch gekennzeichnet, dass** zumindest zwei als Sperrschlitze ausgebildete, benachbarte Sperröffnungen (5, 6, 7, 8) am Randbereich (12, 12', 13, 13') in ihrem Zwischenraum jeweils einen seitlich vorstehenden Wirkabschnitt (16, 17) bilden.

8. Schaltvorrichtung nach einem der Ansprüche 1 bis 7, **dadurch gekennzeichnet, dass** die Sperrschlitze an ihren Außenkanten jeweils eine Fase (21) aufweisen.

9. Schaltvorrichtung nach einem der Ansprüche 1 bis 8, **dadurch gekennzeichnet, dass** an der Oberfläche zumindest einer flachen Seite (9, 9',10, 10') und/oder an der Oberfläche zumindest einer Längsseite (14, 14', 15) eine durch Vertiefungen gebildete Rastkontur vorgesehen sind.

10. Schaltvorrichtung nach einem der Ansprüche 1 bis 9, **dadurch gekennzeichnet, dass** zur Befestigung wenigstens eines Funktionselements am Übertragungselement (2, 2') an zumindest einer flachen Seite (9, 9', 10, 10') und/oder an einer schmalen Längsseite (14, 14', 15) zumindest eine Aufnahmeöffnung (22, 23, 24) vorgesehen ist.

11. Schaltvorrichtung nach einem der Ansprüche 1 bis 10, **dadurch gekennzeichnet, dass** zwei an den Randbereichen (12, 13) gegenüberliegend ausgebildete Sperrschlitze und eine an den flachen Seiten (9, 10) mittig zwischen diesen ausgebildete Aufnahmeöffnung (22, 23) fluchtend zueinander angeordnet sind.

12. Schaltvorrichtung nach einem der Ansprüche 1 bis 11, **dadurch gekennzeichnet, dass** das Übertragungselement (2) schlanke axiale Endabschnitte (2a, 2b) aufweist, an welchen jeweils ein Adapterelement (25, 26) fixierbar ist.

13. Schaltvorrichtung nach einem der Ansprüche 1 bis 12, **dadurch gekennzeichnet, dass** zur Lageerkennung zumindest eine Kerbe (27) an zumindest einer Längsseite (14, 14', 15) vorgesehen ist.

## Claims

1. Shifting device for a manual transmission of a motor vehicle, with at least one transmission element (2, 2') which is rotatable about an axis of rotation (1) in order to introduce shifting movements into the manual transmission and is longitudinally displaceable along said axis of rotation, wherein the transmission element (2, 2') has a substantially rectangular cross-sectional profile, **characterized in that**, in order to block a rotational or longitudinal movement of the transmission element (2, 2'), at least one blocking opening (4-8) is provided directly on the flat sides (9, 9', 10, 10') of the transmission element (2, 2').

2. Shifting device according to Claim 1, **characterized in that** at least one functional element is introduced directly into the material of the transmission element (2, 2').

3. Shifting device according to either of Claims 1 and 2, **characterized in that** at least one blocking opening (4) is arranged centrally between the lateral edge regions (12, 12', 13, 13') of the flat sides (9, 9', 10, 10').

4. Shifting device according to one of Claims 1 to 3, **characterized in that**, starting from the narrow longitudinal sides (14, 15) of the transmission element (2), at least two mutually opposite blocking openings (5, 6, 7, 8) designed as blocking slots are arranged on the edge regions (12, 13).

5. Shifting device according to one of Claims 1 to 4, **characterized in that** at least one laterally protruding active section (16, 17, 28-31) which is formed integrally with the transmission element (2, 2') is provided on one or both longitudinal sides (14, 14', 15) of said transmission element.

6. Shifting device according to one of Claims 1 to 5, **characterized in that** a shifting finger (18) formed integrally with the transmission element (2, 2') is arranged on a longitudinal side (14, 14', 15) of said transmission element.

7. Shifting device according to one of Claims 1 to 6, **characterized in that** at least two adjacent blocking openings (5, 6, 7, 8), which are designed as blocking slots, in each case form a laterally protruding active section (16, 17) in the gap therebetween on the edge region (12, 12', 13, 13').

8. Shifting device according to one of Claims 1 to 7, **characterized in that** the outer edges of the blocking slots each have a bevel (21).

9. Shifting device according to one of Claims 1 to 8, **characterized in that** a latching contour formed by depressions is provided on the surface of at least one flat side (9, 9', 10, 10') and/or on the surface of at least one longitudinal side (14, 14', 15).

10. Shifting device according to one of Claims 1 to 9, **characterized in that** at least one receiving opening (22, 23, 24) is provided on at least one flat side (9, 9', 10, 10') and/or on a narrow longitudinal side (14, 14', 15) in order to fasten at least one functional element to the transmission element (2, 2').

11. Shifting device according to one of Claims 1 to 10, **characterized in that** two blocking slots formed opposite each other on the edge regions (12, 13) and a receiving opening (22, 23) formed centrally between said blocking slots on the flat sides (9, 10) are arranged in alignment with one another.

12. Shifting device according to one of Claims 1 to 11, **characterized in that** the transmission element (2) has slender axial end sections (2a, 2b) to both of which an adapter element (25, 26) can be fixed.

13. Shifting device according to one of Claims 1 to 12, **characterized in that** at least one notch (27) is provided on at least one longitudinal side (14, 14', 15) for position identification.

## Revendications

1. Dispositif de commutation pour une boîte de vitesses d'un véhicule automobile, avec au moins un élément de transmission (2, 2') rotatif autour d'un axe de rotation (1) et déplaçable longitudinalement le long de celui-ci pour l'introduction de mouvements de commutation dans la boîte de vitesses, dans lequel l'élément de transmission (2, 2') présente un profil de section transversale essentiellement rectangulaire, **caractérisé en ce qu'**il est prévu au moins une ouverture de blocage (4-8) immédiatement sur les côtés plats (9, 9', 10, 10') de l'élément de transmission (2, 2') pour le blocage d'un mouvement rotatif ou longitudinal de l'élément de transmission (2, 2').

2. Dispositif de commutation selon la revendication 1, **caractérisé en ce qu'**au moins un élément fonctionnel est introduit immédiatement dans la matière de l'élément de transmission (2, 2').

3. Dispositif de commutation selon l'une des revendications 1 à 2, **caractérisé en ce qu'**au moins une ouverture de blocage (4) est disposée au milieu entre les régions de bord latérales (12, 12', 13, 13') des côtés plats (9, 9', 10, 10').

4. Dispositif de commutation selon l'une des revendications 1 à 3, **caractérisé en ce que**, partant des côtés longitudinaux étroits (14, 15) de l'élément de transmission (2), au moins deux ouvertures de blocage (5, 6, 7, 8) opposées l'une à l'autre en forme de fentes de blocage sont disposées sur les régions de bord (12, 13).

5. Dispositif de commutation selon l'une des revendications 1 à 4, **caractérisé en ce qu'**il est prévu au moins une section active (16, 17, 28-31) saillante latéralement et formée d'une pièce avec l'élément de transmission (2, 2') sur un côté longitudinal ou les deux côtés longitudinaux (14, 14', 15) de celui-ci.

6. Dispositif de commutation selon l'une des revendications 1 à 5, **caractérisé en ce qu'**un doigt de commutation (18) formé d'une pièce avec l'élément de transmission (2, 2') est disposé sur un côté longitudinal (14, 14', 15) de celui-ci.

7. Dispositif de commutation selon l'une des revendications 1 à 6, **caractérisé en ce qu'**au moins deux ouvertures de blocage voisines (5, 6, 7, 8) en forme de fentes de blocage forment respectivement une section active saillante latéralement (16, 17) dans leur espace intermédiaire sur la région de bord (12, 12', 13, 13').

8. Dispositif de commutation selon l'une des revendications 1 à 7, **caractérisé en ce que** les fentes de blocage présentent chaque fois un chanfrein (21) sur leurs arêtes extérieures.

9. Dispositif de commutation selon l'une des revendications 1 à 8, **caractérisé en ce qu'**il est prévu un contour d'encliquetage formé par des creux sur la surface d'au moins un côté plat (9, 9', 10, 10') et/ou sur la surface d'au moins un côté longitudinal (14, 14', 15).

10. Dispositif de commutation selon l'une des revendications 1 à 9, **caractérisé en ce qu'**il est prévu au moins une ouverture de réception (22, 23, 24) sur au moins un côté plat (9, 9', 10, 10') et/ou sur un côté longitudinal étroit (14, 14', 15) pour la fixation d'au moins un élément fonctionnel sur l'élément de transmission (2, 2').

11. Dispositif de commutation selon l'une des revendications 1 à 10, **caractérisé en ce que** deux fentes de blocage opposées l'une à l'autre sur les régions de bord (12, 13) et une ouverture de réception (22, 23) formée au milieu entre celles-ci sur les côtés plats (9, 10) sont disposées en alignement l'une avec les autres.

12. Dispositif de commutation selon l'une des revendications 1 à 11, **caractérisé en ce que** l'élément de transmission (2) présente des sections d'extrémité axiales élancées (2a, 2b), sur lesquelles un élément d'adaptateur (25, 26) peut respectivement être fixé.

13. Dispositif de commutation selon l'une des revendications 1 à 12, **caractérisé en ce qu'**il est prévu au moins une encoche (27) sur au moins un côté longitudinal (14, 14', 15) pour identifier la position.
